# EUROPÄISCHE PATENTANMELDUNG

(11) **EP 4 253 107 A1**
(43) Veröffentlichungstag der Anmeldung: **04.10.2023**
(21) Anmeldenummer: 23159650.3
(22) Anmeldetag: 02.03.2023
(51) Int. Cl.: B60H 1/00, B60H 1/14, B61D 27/00

(54) **VERFAHREN UND VORRICHTUNG ZUM BESTIMMEN EINES BETRIEBSPARAMETERS EINES KLIMAGERÄTES**

(30) Priorität: 31.03.2022 DE 102022203164
(71) Anmelder: Siemens Mobility GmbH, 81739 München (DE)
(72) Erfinder: Kasap, Irfan, 44653 Herne (DE); Schmitz, Markus, 52379 Langerwehe (DE)
(74) Vertreter: Siemens Patent Attorneys

(57) **Zusammenfassung**

Ein Verfahren und eine Vorrichtung zum Bestimmen wenigstens eines Betriebsparameters eines zur Klimatisierung eines Innenraums eines Fahrzeugs eingesetzten Klimagerätes (1), das zur Nutzung von Abwärme aus einem Kältemittelkreislauf (3) eines elektrischen Antriebsaggregats (2) mit einem Wärmeübertrager (9) verbunden ist, der, abhängig von einem aktuellen Heizbedarf des Klimagerätes (1), von einem Kältemittel durchströmt wird, welches zur Abgabe von Abwärme des elektrischen Antriebsaggregats über den Wärmeübertrager (9) an das Klimagerät (1) vorgesehen ist, gekennzeichnet durch die Schritte
a) Berechnen einer Rücklauf-Temperatur (T_{R}) und eines Rücklauf-Volumenstroms (S_{R}) für das Kältemittel mittels einer Simulationseinrichtung (2S), die auf einem Simulationsmodell basiert, das, ausgehend von aktuellen Betriebsbedingungen des elektrischen Antriebsaggregats, eine Last und eine Trägheit des elektrischen Antriebsaggregats sowie eine Regelung eines Betriebs der elektrischen Antriebskomponente simuliert,
b) Aufprägen der in Schritt a) berechneten Rücklauf-Temperatur (T_{R}) dem Kältemittel durch Ansteuerung einer Heiz-/Kühleinrichtung des Kältemittelkreislaufs (3) und Aufprägen des in Schritt a) berechneten Rücklauf-Volumenstroms (S_{R}) dem Kältemittel durch Ansteuerung einer Pumpe (4, 13) des Kältemittelkreislaufs (3), und
c) Erfassen von Messwerten für den Betriebsparameter.

## Beschreibung

Die Erfindung bezieht sich auf ein Verfahren zum Bestimmen wenigstens eines Betriebsparameters eines zur Klimatisierung eines Innenraums eines Fahrzeugs eingesetzten Klimagerätes, das zur Nutzung von Abwärme aus einem Kältemittelkreislauf eines elektrischen Antriebsaggregats mit einem Wärmeübertrager verbunden ist, der, abhängig von einem aktuellen Heizbedarf des Klimagerätes, von einem Kältemittel durchströmt wird, welches zur Abgabe von Abwärme des elektrischen Antriebsaggregats über den Wärmeübertrager an das Klimagerät vorgesehen ist.

Im Zuge eines Nachweises der Einhaltung von vorgegebenen Spezifikationen eines Fahrzeugs zur Personenbeförderung ist es im Hinblick auf das eingesetzte Klimagerät erforderlich nachzuweisen, dass bestimmte Betriebsparameter, wie beispielsweise ein Energieverbrauch, sich innerhalb zulässiger Werte befindet.

Bei modernen Schienenfahrzeugen, die beispielsweise mittels Batterien und Brennstoffzellen angetrieben sind, ist es bekannt, eine Abwärme des jeweils eingesetzten elektrischen Antriebsaggregats zu nutzen, um eine Klimatisierung eines Fahrgastinnenraums des Fahrzeugs, die mit Hilfe eines Klimagerätes erfolgt, energieeffizienter zu gestalten. Zu diesem Zweck ist das Klimagerät mit einem Wärmeübertrager verbunden, der bei Vorliegen von zusätzlichem Wärmebedarf in Betrieb genommen wird und von einem Kühlmedium eines für das elektrische Antriebsaggregat durchströmt ist. An dem Wärmeübertrager wird Abwärme aus dem Kühlkreis für das elektrische Antriebsaggregat an ein Kühlmittel eines Kühlkreises des Klimageräts übertragen und kann sodann beispielsweise zu Beheizen von Zuluft für den Fahrgastinnenraum genutzt werden.

Somit geht in eine Energieeffizienz bzw. einen Energieverbrauch des Klimagerätes ein, in welchem Umfang Abwärme aus dem Kühlkreis des elektrischen Antriebsaggregats genutzt wird, um die Energieeffizienz des Kältemittelkreises des Klimagerätes günstiger zu gestalten.

Bisher sind die erforderlichen Messungen zum Bestimmen beispielsweise eines Energieverbrauchs des Klimagerätes nur bei vollständig ausgestattetem Fahrzeug möglich, d.h. das elektrische Antriebsaggregat, wie die Batterien oder Brennstoffzellen, müssen bereits im Fahrzeug montiert sein, um zuverlässigen Messungen beispielsweise zum Energieverbrauch des Klimagerätes durchführen zu können.

Es besteht jedoch Bedarf danach, auch in einem früheren Ausbaustadium des Fahrzeugs, bei dem das elektrische Antriebsaggregat noch nicht im Fahrzeug montiert/verfügbar ist, einen Nachweis über die Einhaltung z. B. der zulässigen Energieverbrauchswerte für das Klimagerät führen zu können.

Ausgehend hiervon liegt der Erfindung die Aufgabe zugrunde, das eingangs beschriebene Verfahren insofern weiterzuentwickeln, dass der mindestens eine Betriebsparameter, beispielsweise der Energieverbrauch, ohne Vorhandensein des elektrischen Antriebsaggregats im Fahrzeug geführt werden kann. Außerdem soll eine Vorrichtung zur Durchführung eines solchen Verfahrens angegeben werden.

Im Hinblick auf das Verfahren wird diese Aufgabe bei dem eingangs beschriebenen Verfahren durch die Schritte gelöst:
a) Berechnen einer Rücklauf-Temperatur und eines Rücklauf-Volumenstroms für das Kältemittel mittels einer Simulationseinrichtung, die auf einem Simulationsmodell basiert, das, ausgehend von aktuellen Betriebsbedingungen des elektrischen Antriebsaggregats, eine Last und eine Trägheit des elektrischen Antriebsaggregats sowie eine Regelung eines Betriebs der elektrischen Antriebskomponente simuliert,
b) Aufprägen der in Schritt a) berechneten Rücklauf-Temperatur dem Kältemittel durch Ansteuerung einer Heiz-/Kühleinrichtung des Kältemittelkreislaufs und Aufprägen des in Schritt a) berechneten Rücklauf-Volumenstroms dem Kältemittel durch Ansteuerung einer Pumpe des Kältemittelkreislaufs, und
c) Erfassen von Messwerten für den Betriebsparameter.

In dieser Weise wird das elektrische Antriebsaggregat mit Hilfe der Simulationseinrichtung in eine Bestimmung des wenigstens einen Betriebsparameters einbezogen und ersetzt das Vorhandensein des realen elektrischen Antriebsaggregats. Im Einzelnen kann die Simulationseinrichtung einen Betrieb des elektrischen Antriebsaggregats insofern simulieren, dass eine Last, bzw. durch Komponenten wie den Wärmeübertrager und eine vorgesehene Hydraulik bewirkte Trägheit des elektrischen Antriebsaggregats abgebildet werden. Zudem simuliert die Simulationseinrichtung eine Regelung des elektrischen Antriebsaggregats. Insbesondere kann die Simulationseinrichtung eine Berechnungseinheit zur Berechnung der Rücklauf-Temperatur und des Rücklauf-Volumenstroms des Kältemittels und eine Regelungseinheit zum Simulieren einer Regelung des elektrischen Antriebsaggregates umfassen.

Aus dem simulierten Betrieb des elektrischen Antriebsaggregats wird eine Rücklauftemperatur für das Kältemittel des Kühlkreises des elektrischen Antriebsaggregats sowie ein Volumenstrom für dieses Kühlmittel berechnet. Mit Hilfe der Heiz-/Kühleinrichtung des Kältemittelkreislaufs wird die berechnete Rücklauf-Temperatur dem Kühlmittel aufgeprägt, während eine vorgesehene Pumpe des Kältemittelkreises derart betrieben wird, dass sich der berechnete Rücklauf-Volumenstrom ergibt.

Sofern die berechnete Rücklauf-Temperatur und der berechnete Rücklauf-Volumenstrom solche Werte annehmen, dass durch das elektrische Antriebsaggregat genügend Abwärme (ein vorgegebener Mindestwert wird erreicht) zur Verfügung steht, kann das Klimagerät über den vorgesehenen Wärmeübertrager diese Abwärme nutzen. Dies geschieht durch Übertragung von Wärme aus dem Kältemittel des Kältemittelkreislaufs für das elektrische Antriebsaggregat zu dem Kühlkreislauf des Klimagerätes.

Der Kältemittelkreislauf für das elektrische Antriebsaggregat kann bevorzugt als Solekreislauf ausgebildet sein, da Sole nicht gefriert, eine gute Wärmeleitfähigkeit aufweist und kostengünstig ist.

Bevorzugt kann die Simulationseinrichtung einer Regelung des Klimagerätes das Erreichen eines vorbestimmten Mindestwertes für die verfügbare Abwärme in den Kältemittelkreislauf signalisieren und die Regelung des Klimagerätes kann bei Vorliegen eines aktuellen Heizbedarfs ein Ventil in dem Kältemittelkreislauf freigeben, so dass der Wärmeübertrager von dem Kältemittel durchströmt wird. Insofern zeigt die Simulationseinrichtung dem Klimagerät das Vorliegen verfügbarer Abwärme an, wonach die Regelung des Klimagerätes bedarfsweise das Ventil in dem Kältemittelkreislauf des elektrischen Antriebsaggregats öffnet, so dass die Abwärme für den Betrieb des Klimagerätes genutzt werden kann.

Die Simulationseinrichtung kann einen Betrieb des elektrischen Antriebsaggregats durch ein eindimensionales Simulationsmodell in Echtzeit simulieren. Ein solches Simulationsmodell ist einfach in der Handhabung und fahrzeugspezifische Parameter lassen sich mit sehr geringem Aufwand ändern. Zur Modellierung des elektrischen Antriebsaggregats können insbesondere kommerziell verfügbare Tools wie "Simcenter Amesim" oder "Matlab Simulink" eingesetzt werden.

Zudem kann die Simulationseinrichtung zum Abbilden von Fahrspielen ausgelegt sein, die verschiedene Streckentopografien, verschiedene Besetzungsgrade des Fahrzeugs und verschiedene Außentemperaturen umfassen. Diese verschiedene Betriebsparameter beeinflussen sämtlich die Betriebsbedingungen für das elektrische Antriebsaggregat und damit auch die zu erwartenden Rücklauf-Temperaturen und Rücklauf-Volumenströme für das Kältemittel im Kältekreis des elektrischen Antriebsaggregats. Es wird somit ermöglicht, für verschiedene Betriebszustände jeweils den Betriebsparameter zu bestimmen, vorzugsweise den Energieverbrauch des Klimagerätes.

Bevorzugt ist der Wärmeübertrager in das Klimagerät integriert, so dass kein zusätzliches Gehäuse für diesen Wärmeübertrager erforderlich ist.

Die o.g. Aufgabe wird hinsichtlich der Vorrichtung zum Bestimmen wenigstens eines Betriebsparameters des Klimagerätes gelöst durch eine Vorrichtung nach Anspruch 10.

Ein Ausführungsbeispiel der Erfindung wird nachfolgend unter Bezugnahme auf die Zeichnung noch näher erläutert. Es zeigen:
- Fig.1: eine schematische Darstellung eines Klimageräts in Kombination mit einem elektrischen Antriebsaggregat und
- Fig. 2: eine schematische Darstellung eines Klimagerätes in Kombination mit einer Simulationseinrichtung.

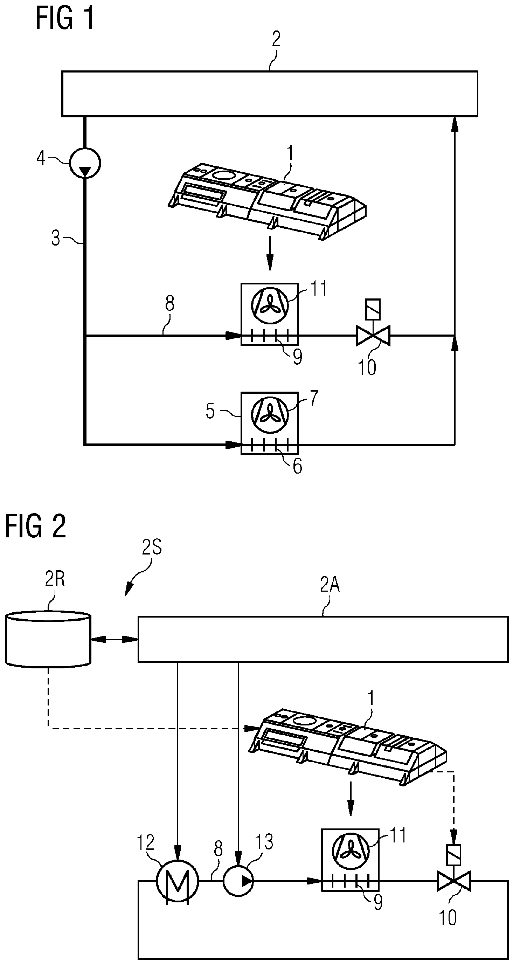

Die schematische Darstellung nach Figur 1 zeigt ein Klimagerät 1, das beispielsweise auf dem Dach eines Schienenfahrzeugs montiert sein kann und in herkömmlicher Weise konditionierte Zuluft für einen Fahrgastinnenraum des Schienenfahrzeugs bereitstellt. Die Zuluft muss gewisse Anforderungen einhalten, was ihre Temperatur angeht. Insbesondere ist es eine Aufgabe des Klimagerätes 1, Zuluft mit einer solchen Temperatur bereitzustellen, dass sich im Fahrgastinnenraum eine gewünschte Solltemperatur ergibt.

Das Klimagerät 1 wirkt zusammen mit einem elektrischen Antriebsaaggregat 2, bei dem es sich z. B. um eine Batterie(-Anordnung) oder Brennstoffzellen(-Anordnung) handeln kann. Das Antriebsaggregat 2 benötigt für seinen dauerhaften Betrieb eine effektive Kühlung. Diese Kühlung wird mit Hilfe eines Kältekreislaufs 3 bereitgestellt, der mit einem Kühlmittel (Sole) betrieben wird. Das Kühlmittel wird mit Hilfe einer im vorliegenden Ausführungsbeispiel auf der Rücklaufseite des Antriebsaggregats 2 angeordneten Pumpe 4 in dem Kühlkreislauf gefördert. Nach Verlassen des Antriebsaggregats 2 ist das Kühlmittel mit Abwärme des Antriebsaggregats 2 beaufschlagt und wird mit Hilfe der Pumpe 4 zu einer Kühlanlage 5 gefördert. Die Kühlanlage 5 ist als Luft/Sole-Wärmeübertrager 6 ausgeführt. Ein zugehöriger Lüfter 7 der Kühlanlage für das Antriebsaggregat 2 kühlt das Kühlmedium durch Wechselwirkung von angesaugter Kühlluft mit den Wärmetauscher 6 auf eine gewünschte Temperatur ab. Das die Kühlanlage 5 verlassende Kühlmittel hat eine geeignete Vorlauftemperatur T_{V} für das Antriebsaggregat 2. Demgegenüber besitzt das Kühlmittel bei Verlassen des Antriebsaggregats 2 eine Rücklauftemperatur T_{R}.

Der Kältekreislauf 3 besitzt eine Verzweigung 8, welche die Seite des Kältemittelkreislaufs 3 mit hoher Temperatur mit der Seite des Kältekreislaufs 3 mit niedriger Temperatur verbindet. Damit gelangt Kältemittel, das mit der Abwärme des Antriebsaggregats 2 beaufschlagt ist, nicht nur zu der Kühlanlage 5 sondern auch zu einem Wärmeübertrager 9. Die Verzweigung 8 des Kältekreislaufs 3 kann mit Hilfe eines Ventils 10 auf Anforderung durch eine Regelung des Klimagerätes 1 freigeschaltet werden, so dass Kältemittel hoher Temperatur den Wärmeübertrager 9 durchströmt. Ein Lüfter 11 fördert die vom Klimagerät 1 bereitgestellte Zuluft an dem Wärmetauscher 9 vorbei, so dass Abwärme des Antriebsaggregats 2 auf die Zuluft übertragen werden kann. Dies geschieht bedarfsweise, d.h. in dem Fall, dass die Regelung der Klimaanlage 1 feststellt, dass ein weiterer Wärmeabtrag in die von dem Klimagerät 1 bereitgestellte Zuluft erforderlich ist. Anders ausgedrückt, wird die Zuluft durch die Wechselwirkung mit dem Wärmeübertrager 9 nachbeheizt.

Bei der mit Hilfe von Figur 1 veranschaulichten Anordnung ist es ohne weiteres möglich, beispielsweise einen Energieverbrauch des Klimagerätes 1 zu messen, insbesondere auch unter Berücksichtigung einer den Energieverbrauch der Klimaanlage 1 senkenden Nutzung der Abwärme des Antriebsaggregats 2. Sofern eine erhebliche Nutzung der Abwärme des Antriebsaggregats 2 vorliegt, sind die Anforderungen an die Klimaanlage 1 geringer, was die von der Klimaanlage 1 selbst herbeizuführende Temperaturerhöhung für die Zuluft angeht. Der Wärmeübertrager 9 ist günstiger Weise in das Klimagerät 1 integriert, und zwar im Bereich eines hier nicht dargestellten Zuluftauslasses der Klimaanlage 1.

Anhand von Figur 2 wird ein Verfahren zur Bestimmung mindestens eines Betriebsparameters, beispielsweise eines Energieverbrauchs des Klimagerätes 1 erläutert, wobei das in Figur 1 real vorliegende elektrische Antriebsaggregat 2 nicht verfügbar ist. Das Antriebsaggregat 2 wird abgebildet durch eine Simulationseinrichtung 2S. Zudem wird auch eine Regelung für das Antriebsaggregat 2 simuliert.

Gegenüber der Figur 1 entfällt das elektrische Antriebsaggregat 2 sowie ihre Kühlanlage 5. Auch der Betrieb der Kühlanlage 5 wird mit Hilfe der Simulationseinrichtung 2S simuliert.

Die Simulationseinrichtung 2S simuliert den Betrieb des realen elektrischen Antriebsaggregats 2 und umfasst dazu eine Abwärme-Berechnungseinheit 2A und eine Regelungseinheit 2R. In der Abwärme-Berechnungseinheit 2A, die computerimplementiert ist, ist ein eindimensionales Simulationsmodel (Echtzeit) hinterlegt, welches das Verhalten des elektrischen Antriebsaggregats 2 im Lastbetrieb und auch das Verhalten der Kühlanlage 5 abbildet. Insbesondere berechnet die Abwärme-Berechnungseinheit 2A die sich im simulierten Betrieb des elektrischen Antiebsaggregats 2 ergebende Rücklauftemperatur T_{R} des Kühlmittels sowie einen Rücklauf-Volumenstrom S_{R} des Kühlmittels.

Die Berechnung der Rücklauftemperatur T_{R} und des Volumenstroms S_{R} sind komplex. Sie ist ein Resultat aus der Regelung, der Hydraulik und der momentan an dem elektrischen Antriebsaggregat anliegenden Last.

Die Verzweigung 8 umfasst nunmehr sowohl eine als Soleaufbereiter ausgeführte Heiz-/Kühleinrichtung 12 als auch eine Pumpe 13. Die Heiz-/Kühleinrichtung 12 ist derart ausgelegt, dass sie das real vorliegende Kältemittel entweder aufheizen oder abkühlen kann. Die Temperatur T_{R} des Kältemittels in der Verzweigung 8 bestimmt sich nach berechneten Werten, die von der Abwärme-Berechnungseinheit 2A bereitgestellt werden. Gleichermaßen verhält es sich mit der Pumpe 13, welche derart betrieben wird, dass sich ein Volumenstrom V_{R} ergibt, der für einen aktuellen Betrieb des Antriebsaggregats 2 von der Abwärme-Berechnungseinheit 2A berechnet wurde.

Die Regelungseinheit 2R signalisiert einer Regelung für die Klimaanlage 1 beispielsweise durch Übertragen eines Bits eine Freigabe zur Nutzung der Abwärme des simulierten Antriebsaggregats 2. Sodann entscheidet die Regelung des Klimagerätes 1 anhand der aktuell erforderlichen Heizlast für die Zuluft, die in den Fahrgastinnenraum zu leiten ist, ob die verfügbare Abwärme des simulierten Antriebsaggregats genutzt werden soll. Im positiven Fall öffnet die Regelung für das Klimagerät 1 das Ventil 10, das bevorzugt als Regelventil ausgebildet ist, so dass die thermische Wechselwirkung der Zuluft mit dem Wärmeübertrager 9 stattfinden kann.

In diesem Testbetrieb kann der Energieverbrauch des Klimagerätes 1 intervallweise oder durchgehend gemessen werden, sodass repräsentative Werte für eine Energieeffizienz des Klimagerätes 1 gewonnen werden können.

Des Weiteren ist die Regelungseinheit 2R der Simulationseinrichtung 2S zum Abbilden verschiedener Fahrspiele ausgelegt. Beispielsweise können für den Betrieb des simulierten elektrischen Antriebsaggregats 2 verschiedene Streckentopografien, verschiedene Besetzungsgrade des Fahrzeugs und auch verschiedene Außentemperaturen zugrunde gelegt werden. Diese beeinflussen sämtlich den simulierten Betrieb der Kühlanlage 5 des elektrischen Antriebsaggregats 2 und aus des Antriebsaggregats 2 selbst.

Vorstehende Beschreibung eines bevorzugten Ausführungsbeispiels der Erfindung gilt gleichermaßen für den Einsatz einer Batterie als das elektrische Antriebsaggregat eines Fahrzeugs, insbesondere Schienenfahrzeugs.

## Patentansprüche

1. Verfahren zum Bestimmen wenigstens eines Betriebsparameters eines zur Klimatisierung eines Innenraums eines Fahrzeugs eingesetzten Klimagerätes (1), das zur Nutzung von Abwärme aus einem Kältemittelkreislauf (3) eines elektrischen Antriebsaggregats (2) mit einem Wärmeübertrager (9) verbunden ist, der, abhängig von einem aktuellen Heizbedarf des Klimagerätes (1), von einem Kältemittel durchströmt wird, welches zur Abgabe von Abwärme des elektrischen Antriebsaggregats über den Wärmeübertrager (9) an das Klimagerät (1) vorgesehen ist,
**gekennzeichnet durch** die Schritte
a) Berechnen einer Rücklauf-Temperatur (T_{R}) und eines Rücklauf-Volumenstroms (V_{R}) für das Kältemittel mittels einer Simulationseinrichtung (2S), die auf einem Simulationsmodell basiert, das, ausgehend von aktuellen Betriebsbedingungen des elektrischen Antriebsaggregats (2), eine Last und eine Trägheit des elektrischen Antriebsaggregats (2) sowie eine Regelung eines Betriebs der elektrischen Antriebskomponente simuliert,
b) Aufprägen der in Schritt a) berechneten Rücklauf-Temperatur (T_{R}) dem Kältemittel durch Ansteuerung einer Heiz-/Kühleinrichtung (12) des Kältemittelkreislaufs (3) und Aufprägen des in Schritt a) berechneten Rücklauf-Volumenstroms (S_{R}) dem Kältemittel durch Ansteuerung einer Pumpe (4, 13) des Kältemittelkreislaufs (3), und
c) Erfassen von Messwerten für den Betriebsparameter.

2. Verfahren nach Anspruch 1,
**dadurch gekennzeichnet, dass**
der Kältemittelkreislauf (3) als Solekreislauf ausgebildet wird.

3. Verfahren nach Anspruch 1 oder 2,
**dadurch gekennzeichnet, dass**
die Simulationseinrichtung (2S) einer Regelung des Klimagerätes (1) das Erreichen eines vorbestimmten Mindestwertes für die verfügbare Abwärme in dem Kältemittelkreislauf (3) signalisiert und die Regelung des Klimagerätes (1) bei Vorliegen eines aktuellen Heizbedarfes ein Ventil (10) in dem Kältemittelkreislauf (3) freigibt, so dass der Wärmeübertrager (6, 9) von dem Kältemittel durchströmt wird.

4. Verfahren nach einem der Ansprüche 1 bis 3,
**dadurch gekennzeichnet, dass**
die Simulationseinrichtung (2S) einen Betrieb des elektrischen Antriebsaggregats (2) durch ein eindimensionales Simulationsmodell in Echtzeit simuliert.

5. Verfahren nach einem der Ansprüche 1 bis 4,
**dadurch gekennzeichnet, dass**
die Simulationseinrichtung (2S) zum Abbilden von Fahrspielen ausgelegt sind, die verschiedene Streckentopografien, verschiedener Besetzungsgrad des Fahrzeugs und verschiedene Au-ßentemperaturen umfassen.

6. Verfahren nach einem der Ansprüche 1 bis 5,
**dadurch gekennzeichnet, dass**
die Simulationseinrichtung (2S) in Schritt a) als Eingangsgrößen der Berechnung eine Vorlauftemperatur (T_{V}) und einen Volumenstrom (Sv) des Kältemittels in dem Kältemittelkreislauf (3) des elektrischen Antriebsaggregats erhält.

7. Verfahren nach einem der Ansprüche 1 bis 6,
**dadurch gekennzeichnet, dass**
die Simulationseinrichtung (2S) eine Batterie oder eine Brennstoffzelle als das elektrische Antriebsaggregat (2) simuliert.

8. Verfahren nach einem der Ansprüche 1 bis 7,
**dadurch gekennzeichnet, dass**
der Wärmeübertrager (6, 9) in das Klimagerät (1) integriert wird.

9. Vorrichtung zum Bestimmen wenigstens eines Betriebsparameters eines zur Klimatisierung eines Innenraums eines Fahrzeugs eingesetzten Klimagerätes (1), das zur Nutzung von Abwärme aus einem Kältemittelkreislauf (3) eines elektrischen Antriebsaggregats mit einem Wärmeübertrager (6, 9) verbunden ist, der, abhängig von einem aktuellen Heizbedarf des Klimagerätes (1), von einem Kältemittel durchströmt wird, welches zur Abgabe von Abwärme des elektrischen Antriebsaggregats über den Wärmeübertrager (6, 9) an das Klimagerät (1) vorgesehen ist,
**dadurch gekennzeichnet, dass**
- zum Berechnen einer Rücklauf-Temperatur (T_{R}) und eines Rücklauf-Volumenstroms für das Kältemittel eine Simulationseinrichtung (2S) vorgesehen ist, die auf einem Simulationsmodell basiert, das, ausgehend von aktuellen Betriebsbedingungen des elektrischen Antriebsaggregats, eine Last und eine Trägheit des elektrischen Antriebsaggregats sowie eine Regelung eines Betriebs der elektrischen Antriebskomponente simuliert,
- zum Aufprägen der berechneten Rücklauf-Temperatur (T_{R}) dem Kältemittel eine von der Simulationseinrichtung (2S) gesteuerte Heiz-/Kühleinrichtung des Kältemittelkreislaufs (3) und zum Aufprägen des berechneten Rücklauf-Volumenstroms dem Kältemittel eine von der Simulationseinrichtung (2S) gesteuerte Pumpe (4, 13) des Kältemittelkreislaufs (3) vorgesehen sind, und
zum Erfassen von Messwerten für den Betriebsparameter eine Messvorrichtung vorgesehen ist.
